# EUROPÄISCHE PATENTANMELDUNG

(11) **EP 3 031 556 A1**
(43) Veröffentlichungstag der Anmeldung: **15.06.2016**
(21) Anmeldenummer: 15198559.5
(22) Anmeldetag: 09.12.2015
(51) Int. Cl.: B23B 31/107, B23B 29/26

(54) **WERKZEUGHALTER**

(30) Priorität: 09.12.2014 DE 102014118250
(71) Anmelder: DIAMETAL AG, 2500 Biel 6 (CH); op de Hipt, Michael, 2533 Evilard (CH)
(72) Erfinder: ZUBER, Michael, 4566 Kriegstetten (CH)
(74) Vertreter: Patentanwälte und Rechtsanwalt Weiß, Arat & Partner mbB

(57) **Zusammenfassung**

Ein Werkzeughalter mit einem Werkzeug für eine Langdrehmaschine und/oder eine Mikro-Langdrehmaschine, wobei der Werkzeughalter eine erste Werkzeugaufnahme (3.1) und zumindest ein Positionssicherungselement (10.2) umfasst, wobei das Werkzeug (4.9) ein Schneidenelement ist oder umfasst, dadurch gekennzeichnet sein, dass das Werkzeug (4.9) ein zylinderförmiges Stiftelement (14) umfasst, wobei das Stiftelement (14) eine Einkerbung (15) zur Aufnahme des Positionssicherungselements (10.2) des Werkzeughalters aufweist, so dass über die Einkerbung (15) des Stiftelements (14) und das Positionssicherungselement (10.2) das Werkzeug (4.9) in dem Werkzeughalter in einer Winkellage und/oder einer Längsposition in der ersten Werkzeugaufnahme (3.1) des Werkzeughalters festlegbar sind.

## Beschreibung

### Technisches Gebiet

Die Erfindung betrifft einen Werkzeughalter nach dem Oberbegriff des Anspruchs 1 sowie ein Spannsystem für einen Werkzeughalter nach dem Oberbegriff des Anspruchs 10.

### Stand der Technik

Im Bereich des Drehens kommt insbesondere bei der Bearbeitung von Werkstücken mit einem grossen Längen-Durchmesserverhältnis das sogenannte Langdrehen zum Einsatz. Beim Langdrehen führt das Werkstück bzw. das zu bearbeitende Stangenmaterial durch eine axial bewegliche Spannzange die Vorschubbewegung aus. Somit sind beim Langdrehen die Werkzeuge/Drehstähle in der Regel axial fixiert

Um eine genaue Bearbeitung des Werkstücks zu ermöglichen weist die Langdrehmaschine in einem Ausführungsbeispiel eine Führungsbuchse auf. Das rotierende Werkstück wird zur Bearbeitung durch die Führungsbuchse hindurch geschoben, wobei die Werkzeuge/Drehstähle unmittelbar nach der Führungsbuchse zur Bearbeitung des Werkstücks angeordnet sind. Dadurch kann ein Verbiegen des Werkstücks bei der Bearbeitung verhindert werden. Durch diese Anordnung entstehen sehr robuste Arbeitsbedingungen, was das Bearbeiten von langen Werkstücken bei sehr hohen Genauigkeiten und in sehr engen Toleranzen ermöglicht

Beim Langdrehen/Mikro-Langdrehen können somit bspw. aus einem Stangenmaterial mit sehr kleinem Durchmesser eine Vielzahl von baugleichen Elementen für eine Serienfertigung erzeugt werden. Hierfür wird das Stangenmaterial zunächst unter einem kontinuierlichen Vorschub bearbeitet, wobei Spanungsquerschnitte im 1/10 mm bis 1/100 mm Bereich auftreten können. Der kontinuierliche Vorschub des Werkstücks/Stangenmaterials wird lediglich zum Abtrennen des zuvor bearbeiteten Elements unterbrochen.

Zur Aufnahme der Werkzeuge weist die Langdrehmaschine Werkzeughalterschlitten auf an denen einzelne Werkzeughalter mit darin angebrachten Werkzeugen angebracht werden können. Auf Grund der unterschiedlichen Bearbeitungsarten des Werkstücks und dem damit unterschiedlichen Abnutzungsgrad müssen die Werkzeuge oder deren Wendeschneidplatten nach unterschiedlichen Laufzeiten gewechselt werden. Nachteilig daran ist, dass dadurch ungewollte Stillstandzeiten entstehen.

Werkzeuge für Langdrehmaschinen aus dem Stand der Technik weisen einen Halter mit einem rechteckigen Querschnitt auf, der mit einer kubischen Wendeschneidplatte bestückt ist, bei der es sich um ein sogenanntes Verschleiss- oder Schneidenteil handelt.

Ein Wechsel der Wendeschneidplatten an dem Werkzeug/Drehstahl ist sehr aufwendig, da diese nur eine sehr geringe Grösse im Bereich 6mm x 8 mm bis 8 mm x 10 mm haben. Der Nachteil an diesen Systemen ist, dass die Wendeschneidplatte jeweils nur über eine Schraube von derselben Seite montiert werden kann. Das bedeutet, dass je nach Anordnung der Werkzeuge in der Maschine, oft die ganzen Halter entfernt werden müssen, um die Wendeschneidplatte zu wechseln, da man mit einem Werkzeug nicht an die Schraube gelangt, welche die Wendeschneidplatte hält. Auf Grund der geringen Grösse gehen solche Wendeschneidplatten beim Wechsel in der Maschine häufig verloren, wodurch unnötige Kosten entstehen. Zudem ist der Wechsel solcher Wendeschneidplatten sehr zeitaufwendig und es kann passieren, dass unter der Platte ein Span zu liegen kommt, wodurch Fehler bei der Bearbeitung erzeugt werden.

Die DE 102 24 126 A1 zeigt einen Mehrfachwerkzeughalter für solche Werkzeuge. Bei diesem Werkzeughalter können zwar mehrere Werkzeuge bzw. Werkzeughalter mit Wendeschneidplatten auf einem Halter angebracht werden, jedoch ist der Austausch einzelner Werkzeuge und/oder von den Wendeschneidplatten auch bei diesem Mehrfachwerkzeughalter sehr aufwendig und zeitintensiv.

### Aufgabe der Erfindung

Aufgabe der Erfindung ist es einen Werkzeughalter zur Verfügung zu stellen, der die Stillstandzeiten einer Drehmaschine, insbesondere einer Langdreh- und/oder Mikro-Langdrehmaschine, reduziert. Zudem ist es Aufgabe der Erfindung einen Werkzeughalter zur Verfügung zu stellen, der eine möglichst einfache und zuverlässige Positionierung des Werkzeugs in dem Werkzeughalter ermöglicht und zudem das Festlegen des Werkzeugs in dem Werkzeughalter sowie den Austausch eines Werkzeugs für den Anwender vereinfacht. Weiterhin ist es Aufgabe der Erfindung einen Werkzeughalter zur Verfügung zu stellen, der bei gegebenen Werkzeughaltepositionen eine erhöhte Werkzeugdichte sowie einen einfacheren Werkzeugwechsel ermöglicht.

### Lösung der Aufgabe

Zur Lösung der Aufgabe führen die Merkmale nach den Ansprüchen 1 und 10. Vorteilhafte Ausgestaltungen sind in den Unteransprüchen beschrieben.

Ein erfindungsgemässer Werkzeughalter ist in einem typischen Ausführungsbeispiel während einer Bearbeitung eines Werkstücks in eine Drehmaschine, insbesondere in eine Langdreh- und/oder Mikro-Langdrehmaschine eingesetzt.

Ein Aspekt der Erfindung ist, dass der erfindungsgemässe Werkzeughalter ein erstes Werkzeug aufweist, das eine erste Funktionalität aufweist und in einer ersten Werkzeugaufnahme angeordnet ist. Weiterhin weist der erfindungsgemässe Werkzeughalter eine weitere Werkzeugaufnahme auf.

Die weitere Werkzeugaufnahme ist wie die erste Werkzeugaufnahme zur Aufnahme eines zu dem ersten Werkzeug identischen Werkzeugs mit der ersten Funktionalität geeignet.

Weiterhin ist die weitere Werkzeugaufnahme zur Aufnahme eines weiteren Werkzeugs mit einer weiteren Funktionalität geeignet. In einem typischen Ausführungsbeispiel weist der Werkzeughalter mehrere weitere Werkzeugaufnahmen auf. In Ausführungsbeispielen weist der erfindungsgemässe Werkzeughalter vorzugsweise eine Gesamtzahl von 2 bis 10 Werkzeugaufnahmen auf. Die erste und die weitere Werkzeugaufnahme sind dabei zur Aufnahme des ersten und/oder des weiteren Werkzeugs geeignet.

Im Rahmen dieser Erfindung ist eine bestimmte Funktionalität derart definiert, dass ein Werkzeug mit einer ersten Funktionalität im Bearbeitungsvorgang beispielsweise eine glatte Schneide zur spanabhebenden Bearbeitung aufweist und eine zweite Funktionalität beispielsweise eine geriffelte Schneide für eine andere Art der Bearbeitung aufweisen kann.

In einem Ausführungsbeispiel sind die erste und die weitere/n Werkzeugaufnahme/n kammförmig in einer ersten Ebene in einer Axialrichtung des Werkstücks angeordnet. Die Axialrichtung des Werkstücks erstreckt sich im Wesentlichen in einer Richtung einer Längsachse des Werkstücks, wobei die Längsachse in typischen Ausführungsbeispielen identisch mit einer Rotationsachse des Werkstücks ist. Vorteilhaft ist hierbei, dass die Verfahrwege des Werkstücks verringert werden, um von dem ersten Werkzeug zu dem weiteren Werkzeug zu kommen.

In einem weiteren Ausführungsbeispiel ist die weitere Werkzeugaufnahme in einer weiteren Ebene angeordnet. Dadurch kann bspw. ermöglicht werden, dass das erste Werkzeug und/oder weitere Werkzeuge in der ersten und/oder weiteren Werkzeugaufnahme in der ersten Ebene und das erste und/oder weitere Werkzeug in der weiteren Werkzeugaufnahme in der weiteren Ebene zur gleichzeitigen Bearbeitung eines Werkstücks nutzbar sind. Bspw. kann hierdurch das Werkstück gleichzeitig mit einem Schrupp- und einem Schlichtwerkzeug bearbeitet werden.

Der erfindungsgemässe Werkzeughalter wird mit Befestigungselementen an einer Werkzeughalterposition eines Werkzeughalteschlittens befestigt. Dadurch, dass der erfindungsgemässe Werkzeughalter eine Vielzahl an Werkzeugaufnahmen aufweist, kann die Werkzeugdichte je mm im Vergleich zum Stand der Technik deutlich erhöht werden.

Während im Stand der Technik meist an jeder Werkzeughalterposition ein Werkzeughalter mit lediglich einem ersten oder einem weiteren Werkzeug angebracht ist, sind durch den erfindungsgemässen Werkzeughalter mehrere erste und/oder weitere Werkzeuge an der Werkzeughalteposition angebracht. Somit kann die Werkzeugdichte je mm in der Drehmaschine, insbesondere in der Langdreh- und/oder Mikro-Langdrehmaschine durch einen erfindungsgemässen Werkzeughalter im Vergleich zum Stand der Technik deutlich gesteigert werden. Bspw. können anstelle von sechs Werkzeughaltern aus dem Stand der Technik mit einer Werkzeugaufnahme, drei erfindungsgemässe Werkzeughalter mit sechs Werkzeugaufnahmen in die Drehmaschine eingesetzt werden, wodurch die dreifache Anzahl an Werkzeugen zur Verfügung steht.

Dies ist insbesondere beim Langdrehen von Interesse, da hier durch die unterschiedliche Belastung verschiedener Werkzeuge mit verschiedenen Funktionaltäten unterschiedliche mögliche Lauf-/Nutzungszeiten der verschiedenen Werkzeuge vorliegen. Mit dem erfindungsgemässen Werkzeughalter können somit in einer Drehmaschine mit einer bestimmten Anzahl an Werkzeughalterpositionen mehr der stärker belasteten Werkzeuge vorgesehen werden als mit Werkzeughaltern aus dem Stand der Technik. Dadurch können die Rüstzeiten, in denen keine Produktion stattfindet verringert werden.

Weiterhin können die erfindungsgemässen Werkzeughalter mit den ersten und weiteren Werkzeugen ausserhalb der Drehmaschine bestückt werden. Dadurch kann ebenfalls die Stillstandzeit der Drehmaschine verkürzt werden, da hierdurch mit dem Austausch eines erfindungsgemässen Werkzeughalters mehrere Werkzeuge auf einmal getauscht werden können. In einem Ausführungsbeispiel sind hierfür die ersten und weiteren Werkzeuge und deren Anzahl, die in die erste und/oder die weiteren Werkzeugaufnahmen eingebracht sind so aufeinander angepasst, dass deren Lauf-/Nutzungszeiten zumindest annähernd übereinstimmen. Somit kann ein erfindungsgemässer Werkzeughalter in einem Ausführungsbeispiel mit zwei identischen Werkzeugen des ersten Werkzeugs mit der ersten Funktionalität und je einem weiteren Werkzeug mit der weiteren Funktionalität ausgestattet sein um die Lauf-/Nutzungsdauer der verschiedenen Werkzeuge aufeinander anzupassen. In diesem Ausführungsbeispiel beträgt die Lauf-/Nutzungsdauer des ersten Werkzeugs folglich der halben Lauf-/Nutzungsdauer der weiteren Werkzeuge.

Der Werkzeughalter mit der ersten und der weiteren Werkzeugaufnahme und den darin eingesetzten ersten Werkzeugen und/oder weiteren Werkzeugen befindet sich während der Bearbeitung des Werkstücks stets im Bereich des zu bearbeitenden Werkstücks.

Insbesondere beim Langdrehen erfolgt eine Vorschubbewegung durch eine axial bewegliche Spannzange. Zur spanenden Bearbeitung wird das Werkzeug in dem erfindungsgemässen Werkzeughalter durch eine Bewegung des Werkzeughalteschlittens und/oder einer Bewegung der Führungsbuchse und/oder der Spannzange an das Werkstück herangeführt. Die Bewegung erfolgt in einer zur Achse des Werkstücks senkrecht stehenden Ebene. Somit muss zur Bearbeitung des Werkstücks mit einem weiteren Werkzeug lediglich der Werkzeughalteschlitten und/oder die Führungsbuchse mit der Spannzange in der Ebene verschoben werden. Ein Austausch des gesamten Werkzeugs, wie er bspw. in CNC-Drehmaschinen vollzogen wird, ist hierfür nicht notwendig.

Ein weiterer wichtiger Aspekt der Erfindung ist, dass in der ersten und/oder weiteren Werkzeugaufnahme des Werkzeughalters eine Positionssicherung vorhanden ist. Die Positionssicherung wird in einem typischen Ausführungsbeispiel durch einen Formschluss zwischen der ersten und/oder weiteren Werkzeugaufnahme und dem ersten und/oder weiteren Werkzeug erreicht. Es ist auch denkbar, dass jedes Werkzeug mit einer eigenen Funktionalität eine definierte Form aufweist, welche nur in die vorgesehenen Werkzeugaufnahmen eingebracht werden kann, um zu verhindern, dass das nicht vorgesehene Werkzeug in eine der Werkzeugaufnahmen einbringbar ist. Vorteilhaft ist dabei, dass eine für ein bestimmtes Werkzeug mit einer bestimmten Funktionalität vergebene Werkzeugaufnahme nicht versehentlich durch ein anderes Werkzeug mit einer anderen Funktionalität besetzt ist. Entsprechende Programmierungen, welche auf die Position eines bestimmten Werkzeugs an einer bestimmten Position des Werkzeugschlittens gerichtet sind, wären somit sicherer durchzuführen, da beim Bestücken der Werkzeugaufnahmen keine Fehler passieren können.

Durch die erfindungsgemässe Positionssicherung kann bspw. eine Winkellage des ersten und/oder weiteren Werkzeugs in der ersten und/oder weiteren Werkzeugaufnahme festgelegt werden. Die Positionssicherung umfasst in einem Ausführungsbeispiel eine Vorrichtung zur Einstellung einer definierten Winkellage des ersten und/oder weiteren Werkzeugs in der ersten und/oder weiteren Werkzeugaufnahme. Bei der Vorrichtung zur Einstellung einer definierten Winkellage des ersten und/oder weiteren Werkzeugs in der ersten und/oder weiteren Werkzeugaufnahme handelt es sich in einem Ausführungsbeispiel um eine Winkelpositionierungsfläche. Weiterhin kann über die Positionssicherung in einem Ausführungsbeispiel eine Längenposition des ersten und/oder weiteren Werkzeugs in der ersten und/oder weiteren Werkzeugaufnahme festgelegt werden.

Durch die Festlegung der Winkellage und/oder der Längsposition der ersten und/oder weiteren Werkzeuge in den ersten und/oder weiteren Werkzeugaufnahmen, kann der Aufwand beim Einsetzen des Werkzeughalters im Vergleich zu herkömmlichen Werkzeughaltern weiter verringert werden. Die Vereinfachung kann insbesondere durch ein vereinfachtes Einmessen der frischen Werkzeuge sowie einen Entfall aufwendiger Einstellmassnahmen in der Drehmaschine erreicht werden.

Hierfür umfassen der Werkzeughalter und das Werkzeug für die Langdrehmaschine und/oder die Mikro-Langdrehmaschine die erste und/oder weitere Werkzeugaufnahme und zumindest ein Positionssicherungselement. Das Werkzeug ist ein Schneidenelement oder umfasst das Schneidenelement. Zudem umfasst das Werkzeug ein zylinderförmiges Stiftelement, das vorzugsweise Feine Einkerbung zur Aufnahme des Positionssicherungselements des Werkzeughalters aufweist, so dass über die Einkerbung des Stiftelements und die Positionssicherungselemente das Werkzeug in dem Werkzeughalter in der Winkellage und/oder der Längsposition in der ersten und/oder weiteren Werkzeugaufnahme des Werkzeughalters festlegbar ist.

Bei der Einkerbung des Stiftelements kann es sich weiterhin um eine anders geformte Ausnehmung in dem Stiftelement des Werkzeugs handeln, die eine Positionssicherung des Werkzeugs ermöglicht. Nur beispielsweise seien hier umlaufende Nuten, Bohrungen oder sonstige Ausfräsungen genannt. Es muss lediglich ermöglicht werden, dass die Einkerbung mit dem Positionssicherungselement/den Positionssicherungselementen in Wirkverbindung treten kann.

Weiterhin können die Positionssicherungselemente aus mehreren Elementen bestehen, so dass bspw. die Längsposition des Werkzeugs in dem Werkzeughalter über die Einkerbung mit einem Befestigungselement festgelegt wird und die Winkellage über in der Werkzeugaufnahme und an dem Stiftelement des Werkzeugs zueinander korrespondierenden Fasen.

In einem Ausführungsbeispiel umfasst das Positionssicherungselement ein Befestigungselement, wobei das Befestigungselement vorzugsweise eine Schraube, ein Bolzen oder ein Stift ist, der das Werkzeug in dem Werkzeughalter über die Einkerbung des Stiftelements in der Winkellage und/oder der Längsposition festlegt.

In einem weiteren Ausführungsbeispiel umfasst das Positionssicherungselement ein Spannelement. Das Spannelement weist zumindest einen Spannstift, ein Federelement und einen Spannhebel auf.

In einem bevorzugten Ausführungsbeispiel ist das Spannelement ein Kniehebelverschluss, welcher das Anspannen und Entspannen des Werkzeugs auf einfache Art und Weise ermöglicht und trotzdem eine ausreichende Klemmung gegen das ungewollte Herausgleiten des Werkzeugs ermöglicht.

Der Spannhebel ist einem Ausführungsbeispiel exzentrisch um einen Drehpunkt in dem Spannelement gelagert. In einem weiteren Ausführungsbeispiel weist der der Spannhebel eine Aussenkontur auf, die zumindest teilwiese eine um den Drehpunkt exzentrische Formgebung aufweist. Dadurch kann durch ein Verdrehen des Spannhebels zu dem Werkzeughalter hin, der Spannstift, der über eine Aussenkontur des Spannhebels mit dem Spannhebel in Wirkverbindung steht, in die Werkzeugaufnahme gedrückt werden. Bei einem Verdrehen des Spannhebels von dem Werkzeughalter weg, wird der Spannstift durch das Federelement aus der Werkzeugaufnahme des Werkzeughalters hinausgedrückt, wobei der Spannhebel, insbesondere dessen mit dem Spannstift in Wirkverbindung stehende Aussenkontur, ein Herausfallen des Spannstifts verhindert.

In einem Ausführungsbeispiel umfasst der Werkzeughalter mehrere Werkzeugaufnahmen, wobei neben der ersten Werkzeugaufnahme zumindest eine weitere Werkzeugaufnahme in dem Werkzeughalter angeordnet ist. Die Werkzeugaufnahmen können vorzugsweise Werkzeuge mit der ersten Funktionalität und/oder weitere Werkzeuge mit weiteren Funktionalitäten aufnehmen.

Auch die Möglichkeit ein einzelnes erstes und/oder weiteres Werkzeug in der ersten und/oder weiteren Werkzeugaufnahme des Werkzeughalters separat auszutauschen, kann dadurch ebenfalls erleichtert werden.

Weiterhin umfasst der Erfindungsgedanke ein Spannsystem zum Festlegen von einem Werkzeug in einem Werkzeughalter in einer Drehmaschine, insbesondere einer Langdreh- und/oder Mikro-Langdrehmaschine, das ein Positionssicherungselement umfasst. Das Positionssicherungselement des Spannsystems umfasst zumindest einen Spannhebel, ein Federelement, eine Spannstiftführung und einen Spannstift, wobei der Spannhebel mit dem Spannstift in Wirkverbindung steht und der Spannstift durch ein Verdrehen des Spannhebels um einen Drehpunkt in der Spannstiftführung verschiebbar ist.

Dies wird vorzugsweise über eine exzentrische Lagerung des Spannhebels in der Spannstiftführung oder eine um den Drehpunkt exzentrisch ausgeformte Aussenkontur des Spannhebels erreicht. Die Aussenkontur des Spannhebels ist vorzugsweise insbesondere in dem Bereich exzentrisch ausgeformt, in dem die Aussenkontur mit dem Spannstift in Wirkverbindung treten kann. Zudem sollte die exzentrische Lagerung bzw. die exzentrische Aussenkontur des Spannhebels so ausgebildet sein, dass sobald der Spannhebel von dem Werkzeughalter wegbewegt wird, das Federelement den Spannstift in der Spannstiftführung ausreichend aus der Werkzeugaufnahme hinausdrücken kann, so dass ein Werkzeug mit dem zylinderförmigen Stiftelement aus der Werkzeugaufnahme herausgenommen werden kann oder in diese eingeführt werden kann. Zum Festlegen des Werkzeugs wird der Spannhebel des Spannsystems zu dem Werkzeughalter hin bewegt, wodurch der Spannstift über die Aussenkontur des Spannhebels in der Spannstiftführung in Richtung in die Werkzeugaufnahme bewegt wird und dort das Werkzeug über die Einkerbung im Stiftelement festlegen kann.

In einem weiteren Ausführungsbeispiel ist das erste und/oder weitere Werkzeug in der ersten und/oder weiteren Werkzeugaufnahme antreibbar. Dadurch kann bspw. das Abtrennen eines fertig gestellten Elements von dem Werkstück beschleunigt werden.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Figur 1: eine perspektivische Darstellung auf einen Bearbeitungsbereich einer Langdrehmaschine mit Ausführungsbeispielen erfindungsgemässer Werkzeughalter mit Werkzeugen;
- Figur 2: eine weitere perspektivische Darstellung aus einem anderen Blickwinkel auf die Werkzeughalter nach Figur 1;
- Figur 3: eine perspektivische Darstellung auf den Bearbeitungsbereich einer Langdrehmaschine mit weiteren Ausführungsbeispielen erfindungsgemässer Werkzeughalter mit Werkzeugen;
- Figur 4: eine perspektivische Darstellung eines mehrreihigen Werkzeughalters nach Figur 3 während einer Bearbeitung eines weiteren Werkstücks;
- Figur 5: eine Draufsicht auf den weiteren Werkzeughalter nach Figur 4;
- Figur 6: eine perspektivische Darstellung eines Ausführungsbeispiels eines mehrreihigen Werkzeughalters;
- Figur 7: eine perspektivische Darstellung eines Werkzeughalters mit einem erfindungsgemässen Spannsystem; und
- Figur 8: eine Schnittdarstellung durch den Werkzeughalter nach Figur 7.

### Ausführungsbeispiel

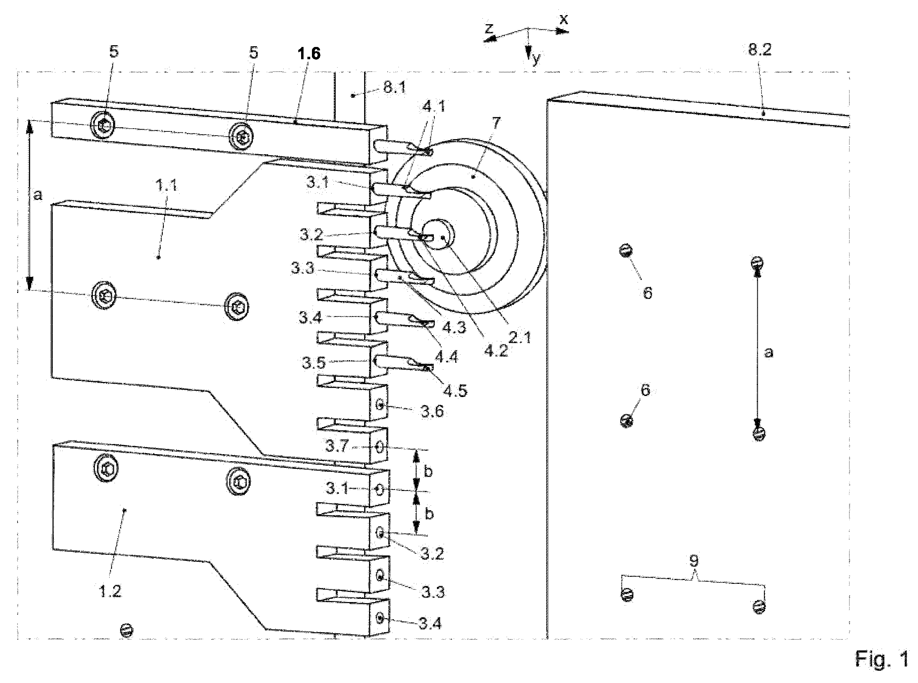

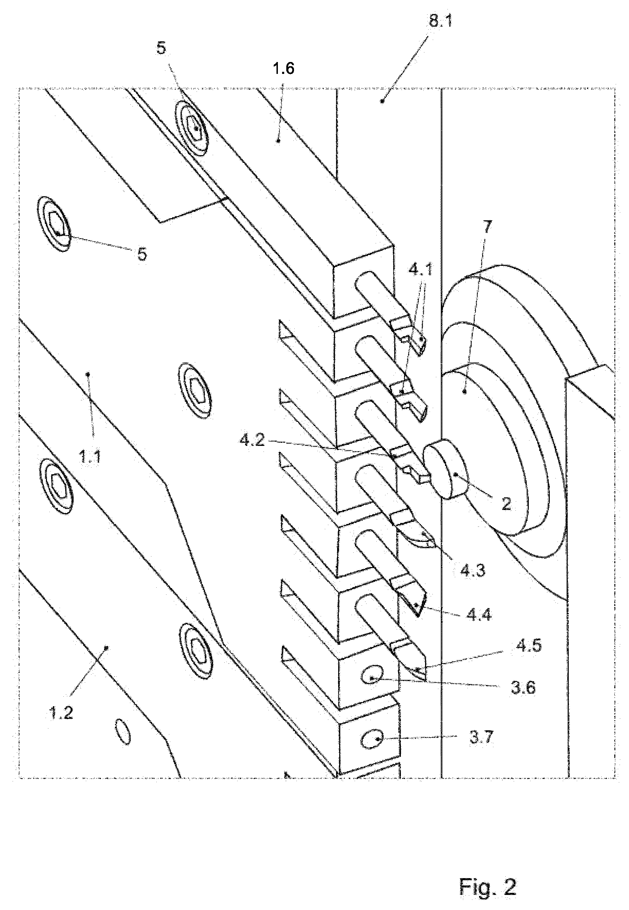

In den Figuren 1 und 2 sind verschiedene Ansichten auf einen Bearbeitungsbereich einer Langdrehmaschine mit Ausführungsbeispielen eines Werkzeughalter 1.1, 1.2 und 1.5 dargestellt.

Der Werkzeughalter 1.1 weist ein erstes Werkzeug 4.1 auf, das während der Bearbeitung eines Werkstücks 2.1 in einer Drehmaschine eingesetzt ist. Das erste Werkzeug 4.1 ist in einer ersten Werkzeugaufnahme 3.1 des Werkzeughalters 1.1 angeordnet und weist eine erste Funktionalität auf. Weiterhin umfasst der Werkzeughalter 1.1 eine weitere Werkzeugaufnahme 3.2 bis 3.7. Die weitere Werkzeugaufnahme 3.2 bis 3.7 ist zur Aufnahme des ersten Werkzeugs 4.1 mit der ersten Funktionalität und/oder eines weiteren Werkzeugs 4.2 bis 4.9 mit einer weiteren Funktionalität geeignet. Der Werkzeughalter 1.1 weist im dargestellten Ausführungsbeispiel sieben Werkzeugaufnahmen 3.1 bis 3.7 auf.

Zur Vereinfachung sollen im Weiteren durch den Begriff "Werkzeug" das erste Werkzeug 4.1 und die weiteren Werkzeuge 4.2 bis 4.9 und durch den Begriff "Werkzeugaufnahme" die erste Werkzeugaufnahme 3.1 und die weiteren Werkzeugaufnahmen 3.2 bis 3.7 umfasst sein.

Durch den Werkzeughalter 1.2 wird ein weiteres Ausführungsbeispiel mit den Werkzeugaufnahmen 3.1, 3.4 dargestellt. Die Werkzeugaufnahmen 3.1 bis 3.7 der Werkzeughalter 1.1 und 1.2 sind in einem Ausführungsbeispiel, wie in den Figuren 1 und 2 dargestellt, kammförmig in einer ersten Ebene in einer x-y-Ausrichtung angeordnet. Eine z-Richtung entspricht dabei in einem typischen Ausführungsbeispiel einer Richtung in der sich regelmässig eine Längsachse des zu bearbeitenden Werkstücks 2.1 bis 2.3 erstreckt. Die Werkzeugaufnahmen 3.1 bis 3.7 der Werkzeughalter 1.1 und 1.2 weisen dabei in dem dargestellten Ausführungsbeispiel zueinander einen Abstand b auf.

In einem Ausführungsbeispiel umfassen einzelne oder alle Werkzeugaufnahmen 3.1 bis 3.7 der Werkzeughalter 1.1 und 1.2 nicht näher dargestellte Positionssicherungselemente 10.1 und 10.2. Die erfindungsgemässen Werkzeuge 4.1 bis 4.9 umfassen in einem typischen Ausführungsbeispiel ein zylinderförmiges Stiftelement 14, welches mit den zylinderförmigen Werkzeugaufnahmen 3.1 bis 3.7 korrespondiert. Eine Querschnittsfläche des zylinderförmigen Stiftelements 14 kann beispielsweise eine kreisrunde, elliptische oder ovale Form aufweisen. Bei den Werkzeugen 4.1 bis 4.9 handelt es sich um ein Schneidenelement oder die Werkzeuge umfassen ein Schneidenelement.

Die Positionssicherung durch die Positionssicherungselemente 10.1 und 10.2 wird bspw. durch einen Formschluss zwischen der Werkzeugaufnahme 3.1 bis 3.7 und dem Werkzeug 4.1 bis 4.9 erreicht. Dadurch kann eine Winkellage und/oder eine Längenposition des Werkzeugs 4.1 bis 4.5 in der Werkzeugaufnahme 3.1 bis 3.7 festgelegt werden. Das Werkzeug 4.1 bis 4.5 kann anschliessend über in den Figuren 1 und 2 nicht näher dargestellte Positionssicherungselemente einfach in der Werkzeugaufnahme 3.1 bis 3.7 fixiert werden.

In einem nicht dargestellten Ausführungsbeispiel kann zur Positionssicherung des Werkzeugs 4.1 bis 4.9 in der Werkzeugaufnahme 3.1 bis 3.7 des Werkzeughalters 1.1 und 1.2 weiterhin eine Winkelpositionierungsfläche vorhanden sein. Über die Winkelpositionierungsfläche kann bspw. die Winkellage des Werkzeugs 4.1 bis 4.9 in der Werkzeugaufnahme 3.1 bis 3.7 festgelegt werden.

Durch die Festlegung der Winkellage und/oder Längenposition der Werkzeuge 4.1 bis 4.9 in dem Werkzeughalter 1.1 und 1.2 kann ein Zeitaufwand der bei einem Einmessen der Werkzeuge benötigt wird verringert werden oder bestenfalls ganz entfallen.

In einem typischen Ausführungsbeispiel handelt es sich bei der Drehmaschine um eine Langdreh- bzw. Mikro-Langdrehmaschine. Bei der Langdrehmaschine erfolgt der Vorschub durch eine nicht dargestellte axial verschiebbare Spannzange. Das Werkstück 2.1 bis 2.3 wird im Bearbeitungsbereich durch eine Führungsbuchse 7 geführt. Zudem wird das Werkstück 2.1 bis 2.3 durch die Führungsbuchse 7 gehalten um bspw. ein ungewolltes Verbiegen des Werkstücks 2.1 bis 2.3 zu verhindern, das durch ein von einem ersten oder weiteren Werkzeug 4.1 bis 4.9 erzeugten Moment/Kraft bei der Bearbeitung des Werkstücks 2.1 entstehen könnte. In typischen Ausführungsbeispielen kommt das Langdrehen bei grossen Längen-Durchmesserverhältnissen des Werkstücks 2.1 bis 2.3 zum Einsatz.

Bspw. können beim Langdrehen aus einem Stangenmaterial eine Vielzahl baugleicher Elemente für eine Serienfertigung bearbeitet und hergestellt werden. In einem solchen Ausführungsbeispiel wird der Vorschub des Werkstücks 2.1 bis 2.3 zum Abtrennen des ansonsten fertig bearbeiteten Elements unterbrochen.

Um die Bearbeitung des Werkstücks 2 mit verschiedenen Werkzeugen 4.1 bis 4.9 zu ermöglichen, weist eine Langdrehmaschine in einem typischen Ausführungsbeispiel mehrere Werkzeughalterpositionen 9 mit Ausnehmungen 6 zur Aufnahme von Befestigungselementen 5.1 zur Fixierung der Werkzeughalter 1.1bis 1.5 auf. Die Werkzeugpositionen 9 ??? sind auf Werkzeughalterschlitten 8.1 und 8.2 angeordnet und weisen einen Abstand a auf.

Durch die Nutzung von Werkzeughaltern 1.1 bis 1.3 mit mehreren Werkzeugaufnahmen 3.1 bis 3.7 kann somit die Werkzeugdichte in der Langdrehmaschine erhöht werden. Weiterhin können durch die erfindungsgemässen Werkzeughalter 1.1 und 1.2 Rüstzeiten der Langdrehmaschine deutlich gesenkt werden. Da insbesondere die Werkzeuge, die zum Abtrennen der Elemente genutzt werden, eine höhere Belastung erfahren als die Werkzeuge, die zuvor zur Bearbeitung des Werkstücks 2 genutzt wurden, ergeben sich unterschiedliche Lauf-/Nutzungszeiten der verschiedenen genutzten Werkzeuge. Dadurch können bei Langdrehmaschinen mit Werkzeughaltern 1.5 für ein einzelnes Werkzeug unnötige Rüstzeiten entstehen, die mit einem Produktionsausfall verbunden sind.

Demgegenüber können bei den erfindungsgemässen Werkzeughalter 1.1 und 1.2 mehrere Werkzeugaufnahmen 3.1 bis 3.7 mit den Werkzeugen 4.1 bis 4.5, die eine niedrigere Lauf-/Nutzungszeit aufweisen bestückt werden. Dadurch kann anstelle eines Wechsels des abgenutzten Werkzeugs 4.1 bis 4.5 auf ein weiteres baugleiches Werkzeug 4.1 bis 4.5 zurückgegriffen werden. Vorzugsweise wird die Anzahl einzelner Werkzeuge 4.1 bis 4.5 so ausgewählt, dass alle Werkzeuge 4.1 bis 4.5 zur selben Zeit ausgetauscht werden müssen. Hierfür können in einem Ausführungsbeispiel zur weiteren Reduktion der Rüstzeit weitere Werkzeughalter 1.1 und 1.2 ausserhalb der Langdrehmaschine vorbereitet und bestückt werden. Anschliessend müssen lediglich die Befestigungselemente 5.1 gelöst werden und der Werkzeughalter 1.1, 1.2 mit den abgenutzten Werkzeugen 4.1 bis 4.5 entfernt werde. Danach wird der neu bestückte Werkzeughalter 1.1, 1.2 eingesetzt und mit den Befestigungselementen 5.1 an der Werkzeughalterposition 9 fixiert.

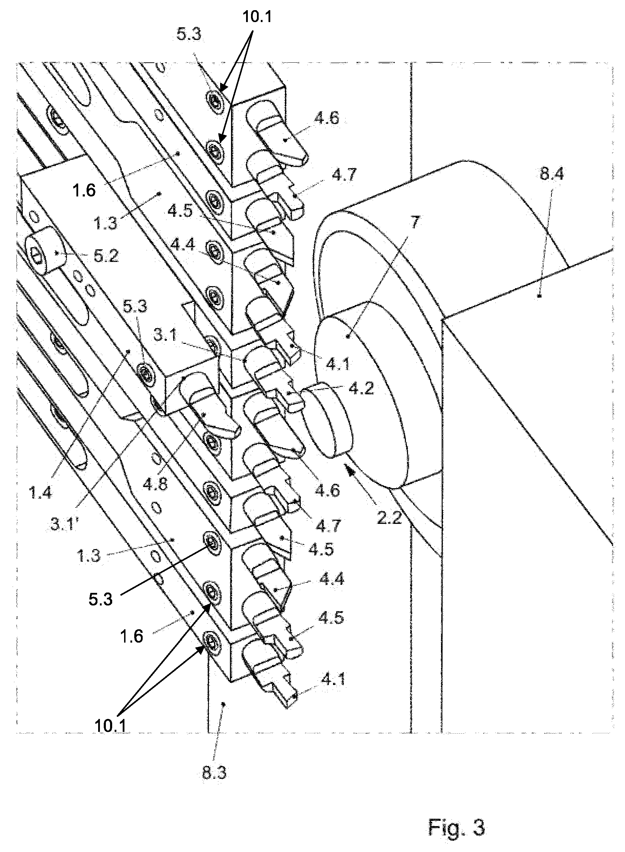

Figur 3 zeigt weitere Ausführungsbeispiele des erfindungsgemässen Werkzeughalters 1.3 und 1.4 zur Bearbeitung eines Werkstücks 2.2. Während der Werkzeughalter 1.3 mit zwei Werkzeugaufnahmen 3.1, 3.2 in der ersten x-y-Ebene ausgestattet ist, ist der Werkzeughalter 1.4 mit einer ersten Werkzeugaufnahme 3.1 in der ersten x-y-Ebene und der weiteren Werkzeugaufnahme 3.1' in einer weiteren x-y-Ebene ausgestattet. Um eine ungewollte Kollision der in Axialrichtung/z-Richtung angeordneten Werkzeuge 4.2 und 4.8 zu verhindern, kann die Längsposition des Werkzeugs 4.8 in der Werkzeugaufnahme 3.1' in der weiteren x-y-Ebene von der Längsposition des Werkzeugs 4.2 in der Werkzeugaufnahme 3.1 in der ersten x-y-Ebene versetzt sein.

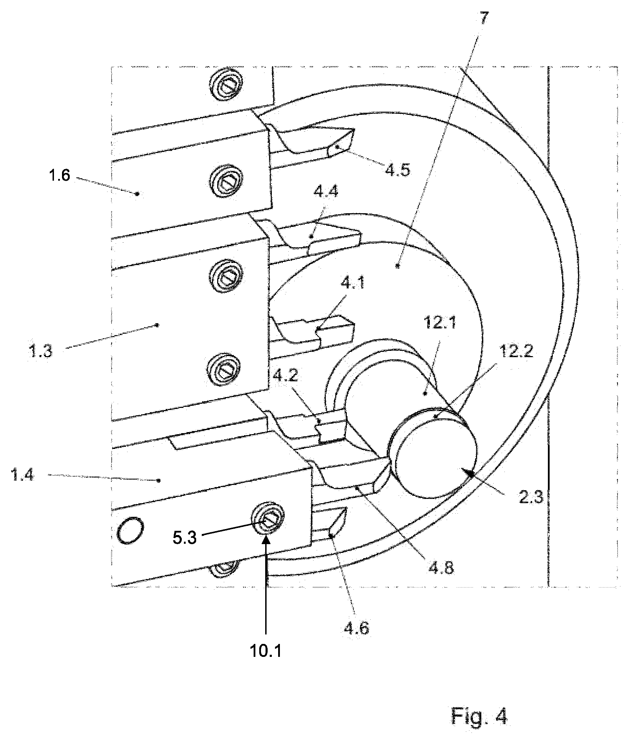

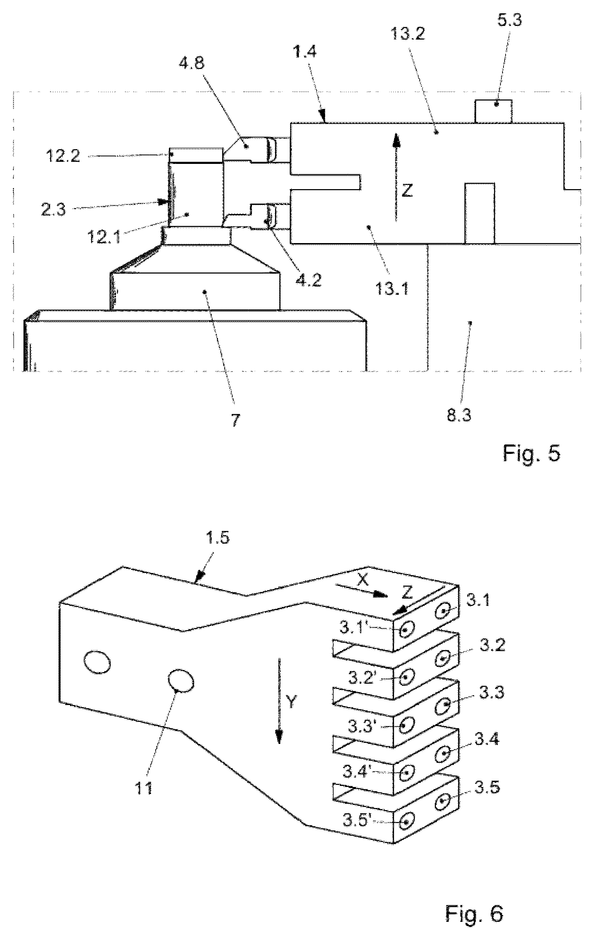

Weiterhin besteht, wie in Figur 4 und 5 dargestellt, die Möglichkeit, dass das erste und/oder weitere Werkzeug 4.1 bis 4.8 in der ersten und/oder weiteren Werkzeugaufnahme 3.1 bis 3.7 in der ersten Ebene und das erste und/oder weitere Werkzeug 4.1 bis 4.8 in der weitern Werkzeugaufnahme 3.1' bis 3.5' in der weiteren Ebene zur gleichzeitigen Bearbeitung eines Werkstücks 2.1 bis 2.3 nutzbar sind.

In dem dargestellten Ausführungsbeispiel wird mit dem Werkzeug 4.2 in der ersten Werkzeugaufnahme 3.1 des Werkzeughalters 4.1 das Werkstück 2.3 in einem ersten Bearbeitungsvorgang bearbeitet. Bei dem Werkzeug 4.2 kann es sich bspw. um ein Schruppwerkzeug handeln. Gleichzeitig wird das Werkstück mit dem Werkzeug 4.8 in der weiteren Werkzeugaufnahme 3.1' des Werkzeugs 1.4 einem weiteren Bearbeitungsvorgang unterzogen. Bei dem Werkzeug 4.8 kann es sich bspw. um Schlichtwerkzeug handeln. Das in den Figuren 4 und 5 dargestellte Werkzeug 1.4 ist mehrteilig ausgebildet, wobei ein weitere Teilstück 13.1 des Werkzeughalters 1.4 der die weitere Werkzeugaufnahme 3.1' in der weiteren x-y-Ebene umfasst, über eine Befestigungselement 5.2 mit einem ersten Teilstück 13.2 des Werkzeughalters 1.4 verbunden ist.

Die Werkzeuge 4.1 bis 4.8 sind in den Ausführungsbeispielen der Figuren 3 und 4 mit Befestigungselementen 5.3 in den Werkzeugaufnahmen 3.1 bis 3.7, 3.1' bis 3.5' festgelegt. Die Befestigungselementen 5.3 sind Teil der Positionssicherungselemente 10.1 über die das Werkzeug 4.1 bis 4.9 mit dem zylinderförmigen Stiftelement 14 in dem Werkzeughalter 1.3 und 1.4 festgelegt werden kann.

Figur 6 zeigt eine weitere Ausführungsform des Werkzeughalters 1.5. Der Werkzeughalter 1.5 weist Werkzeugaufnahmen 3.1 bis 3.5 in der ersten x-y-Ebene und Werkzeugaufnahmen 3.1' bis 3.5' in der weiteren x-y-Ebene auf.

Der einstückig ausgebildete Werkzeughalter 1.5 umfasst Aufnahmen 11 zur Aufnahme der Befestigungselemente 5.1 zur Festlegung des Werkzeughalters 1.5 an der Werkzeughalterposition 9 der Werkzeughalteschlitten 8.1 bis 8.4. Die Werkzeugaufnahmen 3.1' bis 3.5' der weiteren x-y- Ebene sind in einem weiteren nicht dargestellten Ausführungsbeispiel in x-Richtung und/oder y-Richtung versetzt zu den Werkzeugaufnahmen 3.1 bis 3.5 der ersten x-y-Ebene angeordnet. Die Festlegung der Werkzeuge 4.1 bis 4.9 in einem solchen Werkzeughalter 1.5 erfolgt über hier nicht dargestellte Positionssicherungselemente 10, die in eine Einkerbung 15 des zylinderförmigen Stiftelement 14 des Werkzeugs 4.1 bis 4.9 eingreifen können, so dass über die Einkerbung 15 des Stiftelements 14 und die Positionssicherungselemente 10 das Werkzeug 4.1 bis 4.9 in dem Werkzeughalter 1.5 in einer Winkellage und/oder einer Längsposition in den Werkzeugaufnahmen 3.1 bis 3.5 bzw. 3.1' bis 3.5' des Werkzeughalters 1.5 festlegbar sind.

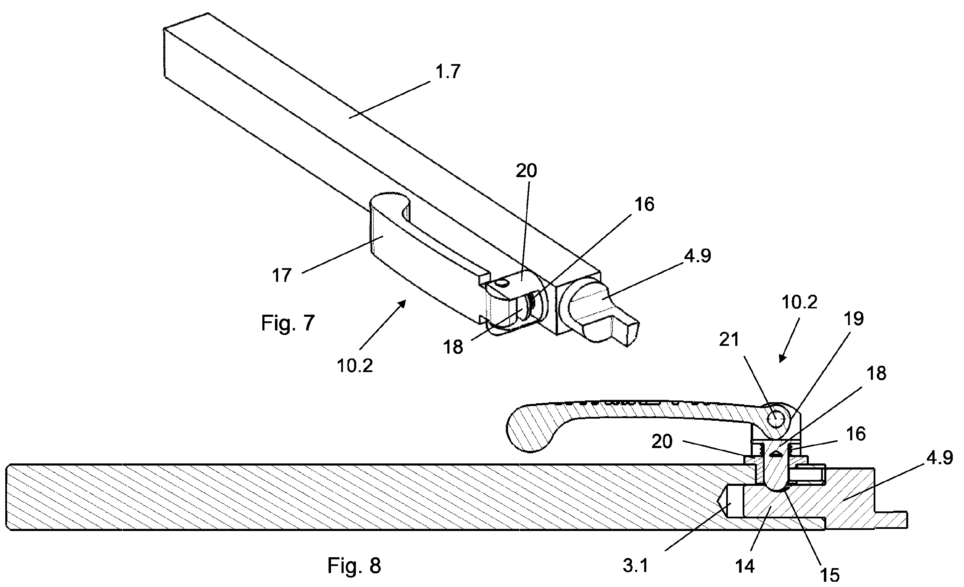

In den Figuren 7 und 8 ist ein Werkzeughalter 1. 6 mit einem erfindungsgemässen Spannsystem zum Festlegen von einem Werkzeug 4.1 bis 4.9 in der Drehmaschine, insbesondere der Langdreh- und/oder Mikro-Langdrehmaschine dargestellt. Das Spannsystem umfasst ein Positionssicherungselement 10.2, das einen Spannhebel 17, ein Federelement16, eine Spannstiftführung 20 und einen Spannstift 18 umfasst. Der Spannhebel 17 steht mit dem Spannstift 18 in Wirkverbindung. Durch ein Verdrehen des Spannhebels 17 um einen Drehpunkt 21 ist der Spannstift 18 in der Spannstiftführung 20 verschiebbar.

Ein solches Spannsystem kommt vorzugsweise als Positionssicherungselement 10.2 auch in den Werkzeughaltern 1.1 bis 1.5 zum Einsatz. Der Spannhebel 17 umfasst in einem typischen Ausführungsbeispiel, wie in Figur 8 dargestellt, eine Aussenkontur 19, die eine um dem Drehpunkt 21 exzentrische Formgebung aufweist. In einem weiteren Ausführungsbeispiel ist der Drehpunkt 21 des Spannhebels 17 exzentrisch vom Mittelpunkt der Aussenkontur 19 gelagert. Die Aussenkontur 19 beschreibt dabei den Bereich des Spannhebels 17, der mit dem Spannstift 18 in Wirkverbindung steht.

Die Festlegung der Winkellage und der Längsposition des Werkzeugs 4.9 erfolgt in dem Werkzeughalter 1.6 wie folgt beschrieben:
Der Spannhebel 17 des Positionssicherungselements 10.2 wird zunächst um den Drehpunkt 21 gedreht, wodurch das Federelement 16 den Spannstift 18 in der Spannstiftführung 20 aus der Werkzeugaufnahme 3.1 hinausdrückt. Nun kann das Werkzeug 4.9 mit dem zylinderförmigen Stiftelement 14 in die Werkzeugaufnahme 3.1 eingeführt werden. Anschliessend wird der Spannhebel 17in eine Richtung zu dem Werkzeughalter 1.6 bewegt, wobei eine Drehung um den Drehpunkt 21 erfolgt. Dies führt dazu, dass die exzentrische Aussenkontur 19 den Spannstift 18 in der Spannstiftführung 20 zu dem Stiftelement 14 des Werkzeugs 4.9 hin drückt. Dieser greift dadurch in die Einkerbung 15 des Stiftelements 14 des Werkzeugs 4.9, wodurch das Werkzeug in der Winkellage und der Längsposition in dem Werkzeughalter 1.6 festgelegt ist.

Durch das einfache Festlegen des Werkzeugs 4.9 mit dem Spannsystem mit dem Positionssicherungselement 10.2 kann somit auch ein einfacher Wechsel der Werkzeuge 4.1 bis 4.9 in Langdreh- und/oder Mikro-Langdrehmaschine ermöglicht werden. Der Werkzeughalter 1.6 kann dabei sowohl direkt an einem Werkzeughalterschlitten 8.1 oder 8.2 oder in einem Werkzeughalter für Werkzeuge aus dem Stand der Technik montiert sein, die für Werkzeuge bzw. Werkzeuge mit Wendeschneidplatten vorgesehen sind, die einen rechteckigen, bspw. quadratischen Querschnitt aufweisen.

Weitere für den Fachmann naheliegende Ausführungsbeispiele und Ausgestaltungen des Werkzeughalters sind durch die vorliegende Erfindung mitumfasst.

**Bezugszeichenliste**

| | | | | | |
|---|---|---|---|---|---|
| 1 | Werkzeughalter | 34 | | x,y,z | Richtung |
| 2 | Werkstück | 35 | | | |
| 3 | erste/weitere Werkzeugaufnahme | 36 | | | |
| 4 | erstes/weiteres Werkzeug | 37 | | | |
| 5 | Befestigungselement | 38 | | | |
| 6 | Ausnehmung | 39 | | | |
| 7 | Führungsbuchse | 40 | | | |
| 8 | Werkzeughalterschlitten | 41 | | | |
| 9 | Werkzeughalterposition | 42 | | | |
| 10 | Positionssicherungselement | 43 | | | |
| 11 | Aufnahme | 44 | | | |
| 12 | Bearbeitungsfläche | 45 | | | |
| 13 | Teilstück | 46 | | | |
| 14 | Stiftelement | 47 | | | |
| 15 | Einkerbung | 48 | | | |
| 16 | Federelement | 49 | | | |
| 17 | Spannhebel | 50 | | | |
| 18 | Spannstift | 51 | | | |
| 19 | Aussenkontur | 52 | | | |
| 20 | Spannstiftführung | 53 | | | |
| 21 | Drehpunkt | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Werkzeughalter mit einem Werkzeug für eine Langdrehmaschine und/oder eine Mikro-Langdrehmaschine, wobei der Werkzeughalter (1.1 - 1.6) eine erste Werkzeugaufnahme (3.1) und zumindest ein Positionssicherungselement (10.1, 10.2) umfasst, wobei das Werkzeug (4.1 - 4.8) ein Schneidenelement ist oder umfasst,
**dadurch gekennzeichnet,**
**dass** das Werkzeug (4.1 - 4.8) ein zylinderförmiges Stiftelement (14) umfasst, wobei das Stiftelement (14) eine Einkerbung (15) zur Aufnahme des Positionssicherungselements (10.1, 10.2) des Werkzeughalters (1.1 - 1.6) aufweist, sodass über die Einkerbung (15) des Stiftelements (14) und das Positionssicherungselement (10.1, 10.2) das Werkzeug (4.1 - 4.8) in dem Werkzeughalter (1.1 - 1.6) in einer Winkellage und/oder einer Längsposition in der ersten Werkzeugaufnahme (3.1) des Werkzeughalters (1.1 - 1.6) festlegbar sind.

2. Werkzeughalter mit einem Werkzeug nach Anspruch 1, **dadurch gekennzeichnet, dass** das Positionssicherungselement (10.1) ein Befestigungselement (5.3) umfasst.

3. Werkzeughalter mit einem Werkzeug nach Anspruch 2, **dadurch gekennzeichnet, dass** das Befestigungselement (5.3) eine Schraube, ein Bolzen oder einen Stift umfasst.

4. Werkzeughalter mit einem Werkzeug nach Anspruch 1, **dadurch gekennzeichnet, dass** das Positionssicherungselement (10.2) ein Spannelement in Form eines Kniehebelverschlusses umfasst.

5. Werkzeughalter mit einem Werkzeug nach Anspruch 4, **dadurch gekennzeichnet, dass** das Spannelement zumindest einen Spannstift (18), ein Federelement (16) und einen Spannhebel (17) aufweist.

6. Werkzeughalter mit einem Werkzeug nach Anspruch 5, **dadurch gekennzeichnet, dass** der Spannhebel (17) exzentrisch um einen Drehpunkt (21) in dem Spannelement gelagert ist.

7. Werkzeughalter mit einem Werkzeug nach Anspruch 5, **dadurch gekennzeichnet, dass** der Spannhebel (17) eine Aussenkontur (19) aufweist, wobei die Aussenkontur (19) zumindest teilwiese eine um den Drehpunkt (21) exzentrische Formgebung aufweist.

8. Werkzeughalter mit einem Werkzeug nach einem der vorherigen Ansprüche, **dadurch gekennzeichnet, dass** der Werkzeughalter (1.1 - 1.6) zumindest eine weitere Werkzeugaufnahme (3.2 - 3.7) umfasst, wobei in der ersten Werkzeugaufnahme (3.1) und der weiteren Werkzeugaufnahme (3.2 - 3.7) das Werkzeug (4.1) mit einer ersten Funktionalität und/oder weitere Werkzeuge (4.2 - 4.9) mit weiteren Funktionalitäten anordenbar sind.

9. Werkzeughalter mit einem Werkzeug nach Anspruch 8, **dadurch gekennzeichnet, dass** die erste Werkzeugaufnahme (3.1) und die weitere Werkzeugaufnahme (3.2 - 3.7) kammförmig in einer ersten Ebene angeordnet sind und/oder in einer weiteren Ebene, wobei die weitere Ebene im Wesentlichen parallel zur ersten Ebene ist, angeordnet sind.

10. Spannsystem zum Festlegen von einem Werkzeug (4.1 -4.8) in einem Werkzeughalter (1.1 - 1.6) in einer Drehmaschine, insbesondere einer Langdreh- und/oder Mikro-Langdrehmaschine, wobei das Spannsystem ein Positionssicherungselement (10.2) umfasst,
**dadurch gekennzeichnet**
**dass** das Positionssicherungselement (102) einen Spannhebel (17), ein Federelement (16), eine Spannstiftführung (20) und einen Spannstift (18) umfasst, wobei der Spannstift (18) mit dem Spannhebel (17) du dem Federelement (16) in Wirkverbindung steht und der Spannstift (18) durch ein Verdrehen des Spannhebels (17) um einen Drehpunkt (21) in der Spannstiftführung (20) verschiebbar ist.
